# EUROPÄISCHE PATENTSCHRIFT

(11) **EP 1 842 056 B1**
(45) Veröffentlichungstag und Bekanntmachung des Hinweises auf die Patenterteilung: **17.09.2014**
(21) Anmeldenummer: 05850510.8
(22) Anmeldetag: 30.12.2005
(51) Int. Cl.: G01N 29/07, G01N 29/22, G01N 29/26

(54) **VERFAHREN UND EINRICHTUNG ZUM ERMITTELN VON DEFEKTEN AN EINEM BAUELEMENT EINER TURBINE**
METHOD AND APPARATUS FOR DETERMINING DEFECTS IN TURBINE PARTS
MÉTHODE ET APPAREIL POUR LA DETECTION DE DEFAULTS DANS UN ÉLÉMENT D'UN TURBINE

(30) Priorität: 27.01.2005 DE 102005003959; 04.02.2005 EP 05002363
(43) Veröffentlichungstag der Anmeldung: 10.10.2007
(73) Patentinhaber: Siemens Aktiengesellschaft, 80333 München (DE)
(72) Erfinder: CLOSSEN-VON LANKEN SCHULZ, Michael, 47608 Geldern (DE); OPHEYS, Michael, 41334 Nettetal (DE)
(86) Internationale Anmeldenummer: PCT/EP2005/057229
(87) Internationale Veröffentlichungsnummer: WO 2006/079443

(56) Entgegenhaltungen:
- EP-A- 1 484 608
- EP-A- 1 491 914
- US-A- 4 242 912
- US-A- 6 089 096
- US-A1- 2004 020 296

## Beschreibung

Die Erfindung betrifft ein Verfahren zum Ermitteln von Defekten an einem Bauelement einer Turbine, mit den Schritten Senden und Empfangen von mindestens einem Ultraschallsignal mittels eines Gruppenstrahlerprüfkopfes an einem zu untersuchenden Flächenbereich des Bauelements. Ferner betrifft die Erfindung eine Mess- und Auswerteeinrichtung zum Ermitteln von Defekten an einem Bauelement einer Turbine, mit einem Gruppenstrahlerprüfkopf zum Senden und Empfangen von mindestens einem Ultraschallsignal an einem zu untersuchenden Flächenbereich des Bauelements.

Zur Ermittelung von Defekten an einem Bauelement einer Turbine, wie beispielsweise einer Turbinenschaufel, ist es grundsätzlich bekannt, eine Ultraschalluntersuchung durchzuführen. Solche Untersuchungen sind aufgrund der bei solchen Bauelementen vorliegenden Geometrien jedoch nur sehr begrenzt möglich und auch vergleichsweise fehlerträchtig.

So ist beispielsweise derzeit eine entsprechende Prüfung von Befestigungsbohrungen von Steckfüßen an Turbinenschaufeln nur nach Ausbau der Schaufeln möglich.

Durch den Einsatz der Gruppenstrahlertechnik (Phased Array Technique) kann an dem zu untersuchenden Flächenbereich ein Fehler ohne Manipulation des Prüfkopfes durch eine bildgebende Darstellung angezeigt werden. Ein solches Verfahren ist aus der EP-A-1 484 608 bekannt. Dies stellt bereits eine Verbesserung dar, denn es kann insbesondere ein zeitintensiver und daher kostspieliger Aus- und Einbau von Turbinenschaufeln entfallen. Mittels der Gruppenstrahlertechnik kann nämlich die Richtung des abgestrahlten Ultraschalls bzw. die Richtung, aus der der Ultraschall empfangen werden kann, verändert werden.

Durch die Gruppenstrahlertechnik ist es z.B. möglich, sichere und schnelle Analysen in einem Fehlererwartungsbereich von Turbinenschaufelfüßen durchzuführen. Dabei können insbesondere Risse erkannt werden, welche als Ermüdungs- bzw. Schwingungsrisse durch hohe mechanische, thermische oder korrosive Belastung entstehen.

Erfindungsgemäß wird nun diese Gruppenstrahlertechnik dahingehend verbessert, dass der Gruppenstrahlerprüfkopf in mehrere linear direkt hintereinander angeordnete virtuelle Prüfköpfe unterteilt und dann mindestens ein Ultraschallsignal mit mindestens zwei der virtuellen Prüfköpfe gerichtet auf einen einzelnen zu untersuchenden Flächenbereich gesendet wird. Die Echosignale aus dem zu untersuchenden Flächenbereich werden von den erfindungsgemäß vorgesehenen mindestens zwei virtuellen Prüfköpfen empfangen. Dabei geht man vorteilhaft mit der Impuls-Echo Methode vor, denn mit dieser Technik können grundsätzlich Defekte besonders präzise ermittelt werden.

Die erfindungsgemäße Mess- und Auswerteeinrichtung ist dazu mit einem Gruppenstrahlerprüfkopf versehen, der in mehrere linear direkt hintereinander angeordnete virtuelle Prüfköpfe unterteilt ist, und es ist eine Steuereinrichtung vorgesehen, mit der mit mindestens zwei der virtuellen Prüfköpfe jeweils mindestens ein Ultraschallsignal auf den einzelnen zu untersuchenden Flächenbereich gerichtet gesendet und empfangen werden kann.

Durch das Senden und Empfangen von Ultraschallsignalen mit mehreren virtuellen Prüfköpfen wird der zu untersuchende Flächenbereich sozusagen aus mehreren Blickrichtungen betrachtet. Entsprechend ist auch das Ergebnis der Prüfung präziser und weniger fehlerträchtig.

Besonders vorteilhaft ist der erfindungsgemäße Gruppenstrahlerprüfkopf in drei virtuelle Prüfköpfe mit insbesondere jeweils zirka 24 Elementen unterteilt. Dazu kann beispielsweise von einem Prüfkopf mit insgesamt 64 Elementen ausgegangen werden, die dann schaltungstechnisch in drei separat anzusteuernde Prüfköpfe unterteilt sind.

Jeder der virtuellen Prüfköpfe wird vorteilhaft beispielsweise durch Programmierung des zugehörigen Ultraschallgeräts so angesteuert, dass mehrere Schüsse auf den zu überwachenden Flächenbereich aussenden kann. Bevorzugt werden beispielsweise 200 solcher Schüsse von jedem der virtuellen Prüfköpfe ausgesendet und entsprechend deren Echosignale empfangen. Die Aussendung der Schüsse erfolgt dabei vorteilhaft derart, dass die Schüsse bzw. die ausgesendeten Ultraschallsignal über den zu untersuchenden Flächenbereich schwenken bzw. schwingen. Dazu kann der Gruppenstrahlerkopf bevorzugt als LinearSchwinger mit möglichst hoher Anzahl an Elementen und/oder einem auswechselbaren Keil gestaltet sein.

Die Position und/oder die Gestalt möglicher Defekte an dem Bauelement kann erfindungsgemäß vorteilhaft durch Kombination der Messergebnisse der mindestens zwei virtuellen Prüfköpfe an dem einzelnen zu untersuchenden Flächenbereich oder durch einen Vergleich mit einem Referenzmessergebnis erfolgen. Dabei kann insbesondere die Flächenausdehnung bzw. die Fehlergröße besonders genau ermittelt werden, weil in der Regel mindestens einer der Prüfschwenks die Kontur des zu ermittelnden Fehlers deutlich erfasst hat.

Ferner kann mit dem erfindungsgemäßen Vorgehen insbesondere die Orientierung eines Defekts an dem Bauelement durch einen Vergleich der Messergebnisse der mindestens zwei virtuellen Prüfköpfe an dem einzelnen zu untersuchenden Flächenbereich oder relativ zu einem Referenzmessergebnis ermittelt werden. Eine solche Abschätzung und Erkennung insbesondere der Orientierung von Rissen an dem zu untersuchenden Bauelement basiert auf dem Umstand, dass in der Regel eine der erfindungsgemäßen Schwenkläufe in den Riss hineinstrahlt, während andere Schwenkläufe gegebenenfalls im Wesentlichen quer zu dessen Ausrichtung über den Riss hinwegschwenken.

Für eine möglichst wirklichkeitsgetreue und durch entsprechende Auswerteeinrichtungen oder -personen besonders leicht durchzuführende Beurteilung der erfindungsgemäß ermittelten Prüfungsergebnisse, ist es besonders vorteilhaft, wenn die erfindungsgemäße Mess- und Auswerteeinrichtung dazu eingerichtet ist, in einem bildgebenden Verfahren eine flächenhafte Darstellung der Messergebnisse der mindestens zwei virtuellen Prüfköpfe zu erzeugen. Besonders bevorzugt wird dabei die Amplitudenhöhe des Echosignals farbcodiert angezeigt. Dies kann insbesondere in einem B-Scan erfolgen, mit dem eine flächenhafte Darstellung der Messergebnisse möglich ist.

Nachfolgend wird ein Ausführungsbeispiel eines erfindungsgemäßen Verfahrens zum Ermitteln von Defekten an einem Bauelement einer Turbine und einer erfindungsgemäßen Mess- und Auswerteeinrichtung zum Ermitteln solcher Defekte anhand der beigefügten schematischen Zeichnungen näher erläutert. Es zeigt:
Fig. 1 eine erste perspektivische Ansicht eines erfindungsgemäß geprüften Bauteils,
Fig. 2 eine zweite perspektivische Ansicht des Bauteils gemäß Fig. 1,
Fig. 3 drei Prinzipskizzen zur Erläuterung des Aufbaus einer erfindungsgemäßen Mess- und Auswerteeinrichtung,
Fig. 4 eine graphische Darstellung der Messergebnisse einer Prüfung mit der Mess- und Auswerteeinrichtung gemäß Fig. 3 und
Fig. 5 den dabei untersuchten Flächenbereich an einem Bauteil gemäß den Fig. 1 und 2.

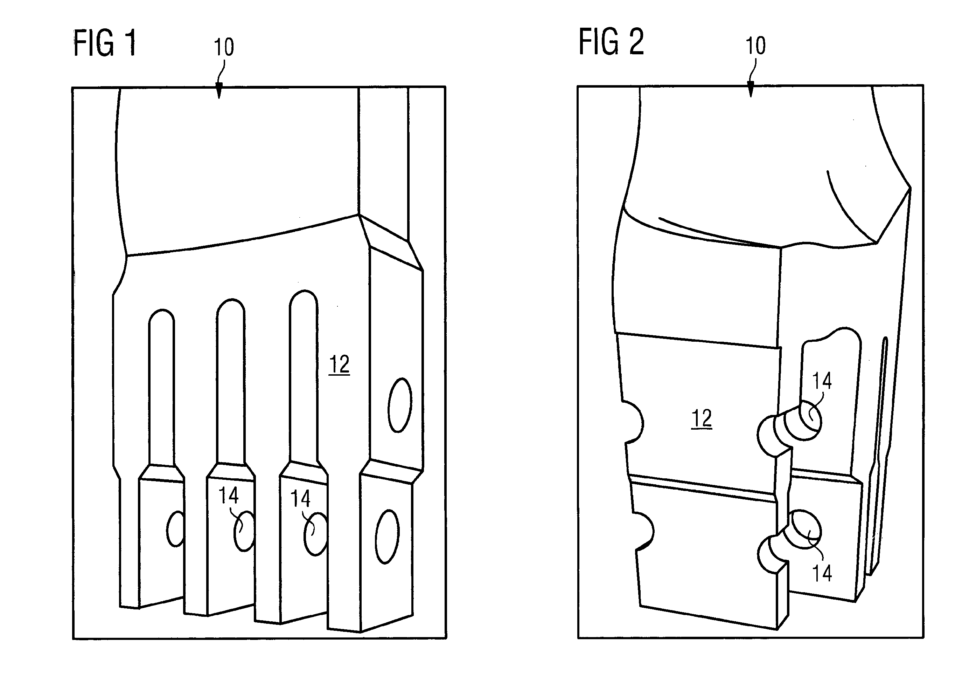

In Fig. 1 ist eine Turbinenschaufel 10 dargestellt, welche zum Anbringen an einer nicht dargestellten Turbinenwelle bzw. einer Radscheibe einer Turbine vorgesehen ist. Eine solche Turbinenschaufel 10 unterliegt im Betrieb der Turbine einer hohen thermischen und auch mechanischen Belastung.

Die Turbinenschaufel 10 weist einen als Steckfuß gestalteten Schaufelfuß 12 mit scheibenförmigen Stegen auf, durch die hindurch Befestigungsbohrungen 14 ausgebildet sind. Insbesondere an den Befestigungsbohrungen 14 kann es aufgrund der genannten Belastungen zu einer Rissbildung kommen.

Eine sichere Prüfung auf eine solche Schädigung der Turbinenschaufeln 10 ist derzeit zur im ausgebauten Zustand der Turbinenschaufeln 10 möglich. Ein Prüfung im eingebauten Zustand mittels Ultraschalltechnik ist nur begrenzt möglich und vergleichsweise fehleranfällig.

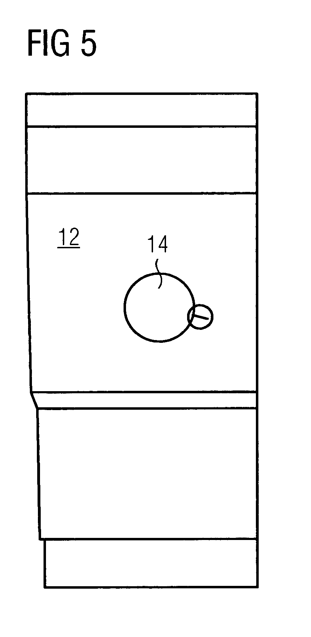

Um die Prüfung zu verbessern wird ein Gruppenstrahlerprüfkopf in Phased Array Technique verwendet und dieser Prüfkopf wird ortsfest an der Turbinenschaufel 10 und/oder der zugehörigen Welle angeordnet. Die Anordnung erfolgt derart, dass der zu untersuchenden Flächenbereich, wie er beispielsweise in Fig. 5 mit einem Kreis veranschaulicht ist, angestrahlt werden kann. Eine Manipulation des Prüfkopfes ist dabei nicht erforderlich.

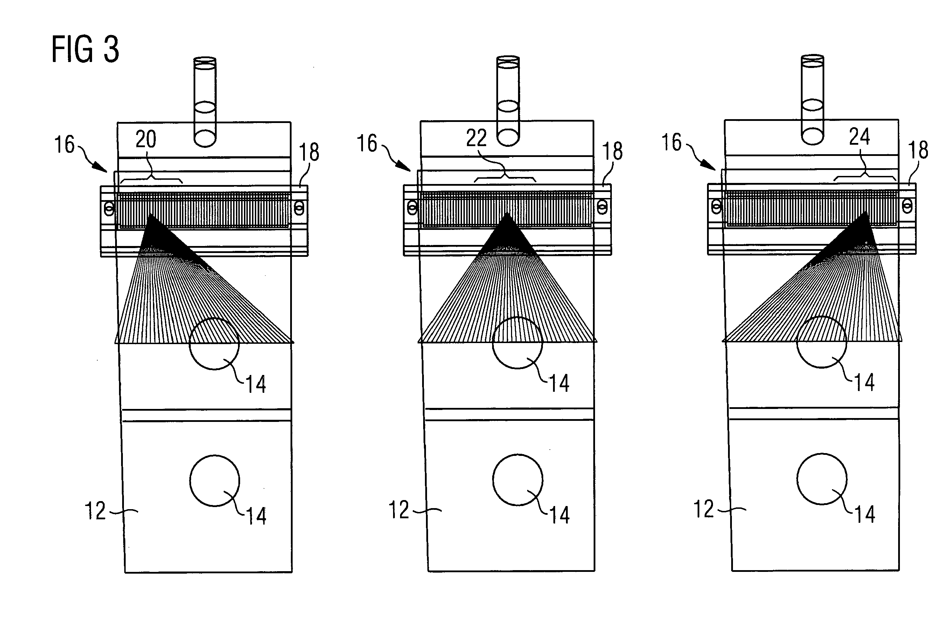

Die dabei verwendete, in Fig. 3 skizzenhaft gezeigte Messund Auswerteeinrichtung 16 ist derart angepasst, dass ihr Gruppenstrahlerprüfkopf 18 in drei virtuelle Prüfköpfe 20, 22 und 24 unterteilt ist.

Von diesen virtuellen Prüfköpfen 20, 22 und 24 umfasst ein erster die Elemente 1 bis 24 des insgesamt 64 Elemente umfassenden Gruppenstrahlerprüfkopfes 18. In entsprechender Weise umfasst der zweite virtuelle Prüfkopf 22 die Elemente 21 bis 44 und der dritte virtuelle Prüfkopf 24 die Elemente 41 bis 64 des Gruppenstrahlerprüfkopfes.

Die einzelnen virtuellen Prüfköpfe 20, 22 und 24 werden mit einer nicht näher dargestellten Steuereinrichtung derart angesteuert, dass mit ihnen jeweils einzelne Schüsse, im vorliegenden Beispiel zirka 200, mittels eines Linear-Schwingers über den zu überprüfenden Flächenbereich als Schwenk gesendet und nachfolgend die Echosignale empfangen werden.

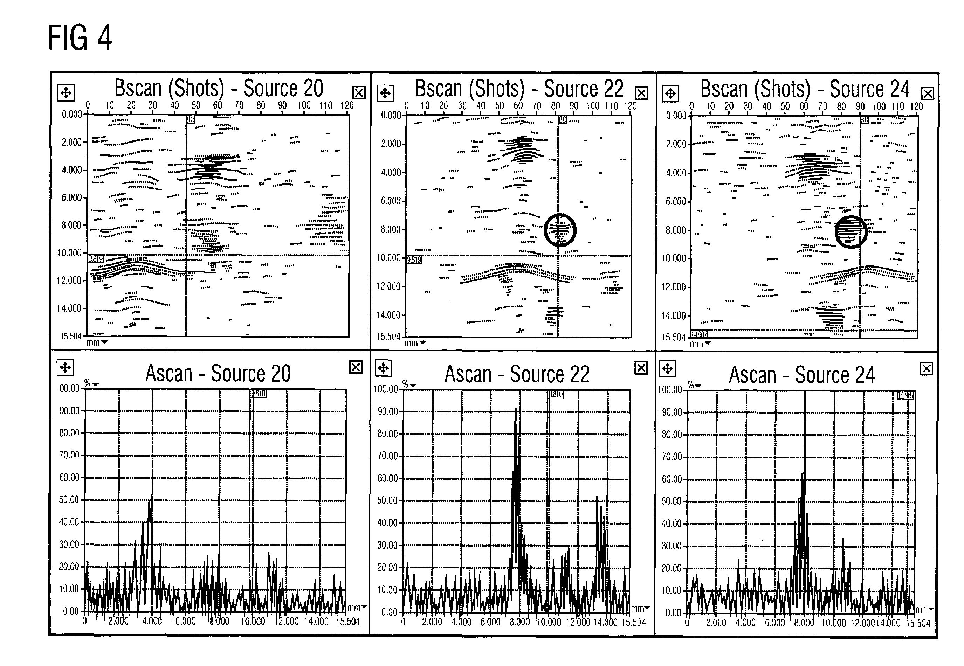

Die Echosignale aller Schüsse eines virtuellen Prüfkopfes werden dann in einem Bscan dargestellt und liefern ein bildgebendes Verfahren mit flächenhafter Darstellung. In der Darstellung werden die Echosignale hinsichtlich ihrer Amplitudenhöhe farbcodiert angezeigt. Diese Anzeige ist mit den in Fig. 4 abgebildeten Bscan-Graphiken mit entsprechend zugehörigen Ascan-Graphiken wiedergegeben. Für jeden virtuellen Prüfkopf wird eine eigene Bscan-Graphik dargestellt.

Durch die verschiedenen virtuellen Prüfköpfe wird dadurch der Fehlererwartungsbereich (wie er beispielhaft in Fig. 5 mit einem Kreis markiert ist) aus verschiedenen Blickwinkeln angeschallt. Diese Anschallung aus verschiedenen Winkeln erlaubt es die Orientierung eines Fehlers bzw. Defektes zu ermitteln.

So ist beispielsweise an den drei Bscan-Graphiken der Fig. 4 zu erkennen, dass der dort mit einem Kreis markierte Riss-Defekt insbesondere in der Überprüfung mit dem zweiten und dem dritten virtuellen Prüfkopf 22 bzw. 24 deutlich erkannt wird, wohingegen er mit dem ersten virtuellen Prüfkopf unentdeckt geblieben ist. Dies lässt einen entsprechend besseren Rückschluss auf die Größe, genaue Form und insbesondere auch auf die Richtung des Riss-Defektes zu.

Insgesamt wird auf diese Weise eine schnelle und zuverlässige Prüfung mit einer verbesserten Bestimmung der Fehlergröße, Fehlerposition und Fehlerorientierung insbesondere der oben genannten Bauelemente möglich.

Darüber hinaus kann das erfindungsgemäße Verfahren und die zugehörige Mess- und Auswerteeinrichtung auch bei vielen anderen Arten von Bauteilen gewinnbringend genutzt werden, bei denen bei herkömmlichen Ultraschallprüfungen mit Gruppenstrahlerprüfköpfen noch Probleme auftraten.

## Patentansprüche

1. Verfahren zum Ermitteln von Defekten an einem Bauelement (10, 12) einer Turbine, mit den Schritten Senden und Empfangen von mindestens einem Ultraschallsignal mittels eines in Phased Array Technik verwendeten Gruppenstrahlerprüfkopfes (18) an einem zu untersuchenden Flächenbereich des Bauelements (10, 12), **gekennzeichnet durch** die Schritte:
- Unterteilen des Gruppenstrahlerprüfkopfes (18) in mehreren linear direkt hintereinander angeordneten virtuelle Prüfköpfe (20, 22, 24) und
- Senden und Empfangen von mindestens einem Ultraschallsignal mit mindestens zwei der virtuellen Prüfköpfe (20, 22, 24) gerichtet auf einen einzelnen zu untersuchenden Flächenbereich.

2. Verfahren nach Anspruch 1,
**gekennzeichnet durch** den Schritt: Erzeugen einer Mehrzahl von Schüssen mit jedem der virtuellen Prüfköpfe (20, 22, 24) auf den einzelnen zu untersuchenden Flächenbereich.

3. Verfahren nach Anspruch 1 oder 2,
**gekennzeichnet durch** den Schritt: Auswerten der Position und/oder der Gestalt möglicher Defekte an dem Bauelement (10, 12) **durch** Kombination der Messergebnisse der mindestens zwei virtuellen Prüfköpfe (20, 22, 24) an dem einzelnen zu untersuchenden Flächenbereich.

4. Verfahren nach einem der Ansprüche 1 bis 3,
**gekennzeichnet durch** den Schritt: Ermitteln der Orientierung eines Defekts an dem Bauelement (10, 12) **durch** Vergleich der Messergebnisse der mindestens zwei virtuellen Prüfköpfe (20, 22, 24) an dem einzelnen zu untersuchenden Flächenbereich.

5. Mess- und Auswerteeinrichtung (16) zum Ermitteln von Defekten an einem Bauelement (10, 12) einer Turbine, mit einem in Phased Array Technik verwendeten Gruppenstrahlerprüfkopf (18) zum Senden und Empfangen von mindestens einem Ultraschallsignal an einem zu untersuchenden Flächenbereich des Bauelements (10, 12),
**dadurch gekennzeichnet, dass** der Gruppenstrahlerprüfkopf (18) in mehrere linear direkt hintereinander angeordneten virtuelle Prüfköpfe (20, 22, 24) unterteilt ist und eine Steuereinrichtung vorgesehen ist, mit der mit mindestens zwei der virtuellen Prüfköpfe (20, 22, 24) jeweils mindestens ein Ultraschallsignal auf einen einzelnen zu untersuchenden Flächenbereich gerichtet gesendet und empfangen werden kann.

6. Mess- und Auswerteeinrichtung nach Anspruch 5,
**dadurch gekennzeichnet, dass** die Steuereinrichtung dazu angepasst ist, auf den einzelnen zu untersuchenden Flächenbereich eine Mehrzahl Schüsse zu richten.

7. Mess- und Auswerteeinrichtung nach Anspruch 5 oder 6,
**dadurch gekennzeichnet, dass** die Steuereinrichtung dazu angepasst ist, durch eine Kombination der Messergebnisse der mindestens zwei virtuellen Prüfköpfe (20, 22, 24) an dem einzelnen zu untersuchenden Flächenbereich die Position und/oder die Gestalt möglicher Defekte an dem Bauelement (10, 12) auszuwerten.

8. Mess- und Auswerteeinrichtung nach einem der Ansprüche 5 bis 7,
**dadurch gekennzeichnet, dass** die Steuereinrichtung dazu angepasst ist, durch einen Vergleich der Messergebnisse der mindestens zwei virtuellen Prüfköpfe (20, 22, 24) an dem einzelnen zu untersuchenden Flächenbereich die Orientierung eines Defekts an dem Bauelement (10, 12) zu ermitteln.

9. Mess- und Auswerteeinrichtung nach einem der Ansprüche 5 bis 8,
**dadurch gekennzeichnet, dass** der Gruppenstrahlerprüfkopf (18) einen Linearschwinger aufweist.

10. Mess- und Auswerteeinrichtung nach einem der Ansprüche 5 bis 9,
**dadurch gekennzeichnet, dass** die Steuereinrichtung dazu eingerichtet ist, in einem bildgebenden Verfahren eine flächenhafte Darstellung der Messergebnisse der mindestens zwei virtuellen Prüfköpfe (20, 22, 24) zu erzeugen.

## Claims

1. Method for determining defects on a constructional element (10, 12) of a turbine, with the steps of transmitting and receiving of at least one ultrasonic signal by means of a phased array probe (18), which is used in a phased array technique, on a surface region, which is to be inspected, of the constructional element (10, 12), **characterized by** the steps:
- dividing the phased array probe (18) into a plurality of virtual probes (20, 22, 24) which are arranged directly one behind the other in linear fashion and
- transmitting at least one ultrasonic signal by at least two of the virtual probes (20, 22, 24) in a directed manner onto an individual surface region which is to be inspected, and receiving the at least one ultrasonic signal.

2. Method according to Claim 1,
**characterized by** the step: producing a plurality of shots by each of the virtual probes (20, 22, 24) on the individual surface region which is to be inspected.

3. Method according to Claim 1 or 2,
**characterized by** the step: evaluating the position and/or the form of possible defects on the constructional element (10, 12) by combination of the measurement results of the at least two virtual probes (20, 22, 24) on the individual surface region which is to be inspected.

4. Method according to Claim 1 to 3,
**characterized by** the step: determining the orientation of a defect on the constructional element (10, 12) by comparison of the measurement results of the at least two virtual probes (20, 22, 24) on the individual surface region which is to be inspected.

5. Measuring and evaluating device (16) for determining defects on a constructional element (10, 12) of a turbine, with a phased array probe (18), which is used in a phased array technique, for transmitting and receiving of at least one ultrasonic signal on a surface region of the constructional element (10, 12) which is to be inspected, **characterized in that** the phased array probe (18) is divided into a plurality of virtual probes (20, 22, 24), which are arranged directly one behind the other in linear fashion, and a control unit is provided, by which by at least two of the virtual probes (20, 22, 24) at least one ultrasonic signal in each case can be transmitted in a directed manner onto a surface region which is to be inspected, and received.

6. Measuring and evaluating device according to Claim 5,
**characterized in that** the control unit is adapted for the purpose of directing a multiplicity of shots onto the individual surface region which is to be inspected.

7. Measuring and evaluating device according to Claim 5 or 6,
**characterized in that** the control unit is adapted for the purpose of evaluating the position and/or the form of possible defects on the constructional element (10, 12) by a combination of the measurement results of the at least two virtual probes (20, 22, 24) on the individual surface region which is to be inspected.

8. Measuring and evaluating device according to one of Claims 5 to 7,
**characterized in that** the control unit is adapted for the purpose of determining the orientation of a defect on the constructional element (10, 12) by a comparison of the measurement results of the at least two virtual probes (20, 22, 24) on the individual surface region which is to be inspected.

9. Measuring and evaluating device according to one of Claims 5 to 8,
**characterized in that** the phased array probe (18) has a linear oscillator.

10. Measuring and evaluating device according to one of Claims 5 to 9,
**characterized in that** the control unit is adapted for the purpose of producing in an imaging process a two-dimensional display of the measurement results of the at least two virtual probes (20, 22, 24).

## Revendications

1. Procédé de détermination de défauts sur un élément ( 10, 12 ) constitutif d'une turbine, comprenant les stades d'émission et de réception d'au moins un signal ultrasonore, au moyen d'une tête ( 18 ) de commande à réseau d'antenne utilisée en technique phased array sur une partie de surface à étudier de l'élément ( 10, 12 ) constitutif, **caractérisé par** les stades .
- de subdivision de la tête ( 18 ) à réseau d'antenne en plusieurs têtes ( 20, 22, 24 ) de contrôle virtuelles disposées linéairement directement les unes derrières les autres et
- d'émission et de réception d'au moins un signal ultrasonore par au moins deux des têtes ( 20, 22, 24 ) de contrôle virtuelles dirigées sur une même partie de surface à étudier.

2. Procédé selon la revendication 1,
**caractérisé par** le stade : de production d'une multiplicité de coups par chacune des têtes ( 20, 22, 24 ) de contrôle virtuelles sur la même partie de surface à étudier.

3. Procédé selon la revendication 1 ou 2,
**caractérisé par** le stade : d'exploitation de la position et/ou de la forme de défauts éventuels sur l'élément ( 10, 12 ) constitutif en combinant les résultats de mesure des au moins deux têtes ( 20, 22, 24 ) de contrôle virtuelles sur la même partie de surface à étudier.

4. Procédé selon l'une des revendications 1 à 3,
**caractérisé par** le stade : de détermination de l'orientation d'un défaut sur l'élément ( 10, 12 ) constitutif en comparant les résultats de mesure des au moins deux têtes ( 20, 22, 24 ) de contrôle virtuelles sur la même partie de surface à étudier.

5. Dispositif ( 16 ) de mesure et d'exploitation pour déterminer des défauts sur un élément ( 10, 12 ) constitutif d'une turbine, comprenant une tête ( 18 ) de contrôle à réseau d'antenne utilisée suivant la technique phased array pour émettre et recevoir au moins un signal ultrasonore sur une partie de surface à étudier de l'élément ( 10, 12 ) constitutif, **caractérisé en ce que** la tête ( 18 ) de contrôle à réseau d'antenne est subdivisée en plusieurs têtes ( 20, 22, 24 ) de contrôle virtuelles disposées linéairement les unes derrières les autres et il est prévu un dispositif de commande par lequel, par au moins deux des têtes ( 20, 22, 24 ) de contrôle virtuelles respectivement, au moins un signal ultrasonore peut être émis et reçu de façon dirigée sur une même partie de surface à étudier.

6. Dispositif de mesure et d'exploitation suivant la revendication 5, **caractérisé en ce que** le dispositif de commande est adapté pour dirigé une pluralité de coups sur la même partie de surface à étudier.

7. Dispositif de mesure et d'exploitation suivant la revendication 5 ou 6, **caractérisé en ce que** le dispositif de commande est adapté pour exploiter, par une combinaison des résultats de mesures des au moins deux têtes ( 20, 22, 24 ) de contrôle virtuelles sur la même partie de surface à étudier, la position et/ou la forme de défauts éventuels de l'élément ( 10, 12 ) constitutif.

8. Dispositif de mesure et d'exploitation suivant l'une des revendications 5 à 7, **caractérisé en ce que** le dispositif de commande est adapté pour déterminer, par une comparaison des résultats de mesures des au moins deux têtes ( 20, 22, 24 ) de contrôle virtuelles sur la même partie de surface à étudier, l'orientation d'un défaut de l'élément ( 10, 12 ) constitutif.

9. Dispositif de mesure et d'exploitation suivant l'une des revendications 5 à 8, **caractérisé en ce que** la tête ( 18 ) de contrôle à réseau d'antenne a un oscillateur linéaire.

10. Dispositif de mesure et d'exploitation suivant l'une des revendications 5 à 9, **caractérisé en ce que** le dispositif de commande est conçu pour produire dans un procédé de reproduction d'images une représentation suivant une surface des résultats de mesure des au moins deux têtes ( 20, 22, 24 ) de contrôle virtuelles.
